(19)

**Europäisches Patentamt**
**European Patent Office**
**Office européen des brevets**

(11) **EP 1 972 067 B1**

(12) **EUROPEAN PATENT SPECIFICATION**

(45) Date of publication and mention
of the grant of the patent:
**13.07.2011 Bulletin 2011/28**

(51) Int Cl.:
**H04B 1/69** *(2011.01)*     **H04L 27/26** *(2006.01)*

(21) Application number: **05811353.1**

(86) International application number:
**PCT/JP2005/021944**

(22) Date of filing: **22.11.2005**

(87) International publication number:
**WO 2007/060749 (31.05.2007 Gazette 2007/22)**

(54) **WIRELESS COMMUNICATION METHOD AND SYSTEM**

VERFAHREN UND SYSTEM ZUR DRAHTLOSEN KOMMUNIKATION

PROCEDE ET SYSTEME DE COMMUNICATION SANS FIL

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**24.09.2008 Bulletin 2008/39**

(73) Proprietor: **National Institute of Information and
Communications Technology
Koganei-shi
Tokyo 184-8795 (JP)**

(72) Inventors:
• **QI, Yihong
c/o Intellectual Property Management Group
Koganei-shi, Tokyo (JP)**
• **KOHNO, Ryuji,
c/o Intellectual Property management Group
Koganei-shi, Tokyo (JP)**

(74) Representative: **Klingseisen, Franz
Klingseisen & Partner
Postfach 10 15 61
80089 München (DE)**

(56) References cited:
**WO-A-2004/079970     WO-A-2005/013504
WO-A-2005/083919**

• **SABERINIA E ET AL: "Pilot assisted multi-user
UWB communications" VEHICULAR
TECHNOLOGY CONFERENCE, 2003. VTC 2003-
FALL. 2003 IEEE 58TH ORLANDO, FL, USA 6-9
OCT. 2003, PISCATAWAY, NJ, USA,IEEE, US, 6
October 2003 (2003-10-06), pages 1885-1889,
XP010702062 ISBN: 0-7803-7954-3**
• **TERO OJANPERA AND RAMJEE PRASAD:
"WCDMA : towards IP mobility and mobile
internet" 2001, ARTECH HOUSE PUBLISHERS ,
LONDON , XP002387431 page 112 - page 113;
figure 5.4**

## Description

Technical Field

The present invention relates to wireless communication apparatus, method and system, where data packets are transmitted and received in the form of radio signals.

Background Art

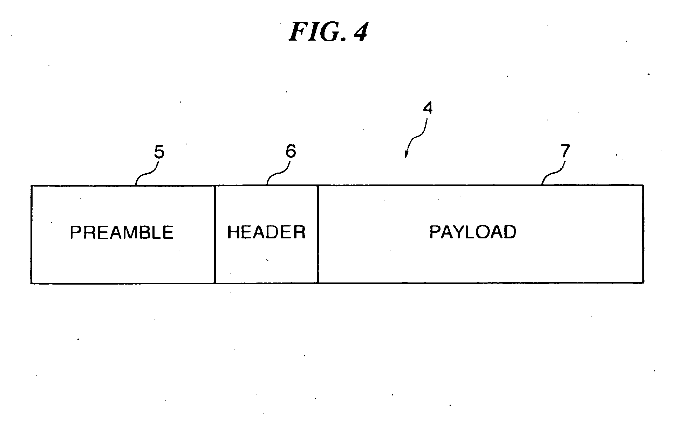

In a wireless communication system, a data packet in the form of a radio signal is transmitted from a transmitter to a receiver. An ordinary type data packets contains three sections; preamble, header and payload. These three sections are arranged sequentially in the packet, as shown in Fig. 4. Each section contains a data sequence, which is designed for its specific purpose. When the receiver receives the packet, the preamble section is used to do synchronization and channel estimation.

Synchronization is to obtain the timing information on how to separate individual data bits in a data sequence. Channel estimation is to estimate representative characteristics of the propagation channel between the transmitter and the receiver. Then the header section is analyzed to get the control information of the packet such as the length or the main function of the packet. Next, the payload section, which carries the real message to be transferred from the transmitter to the receiver is demodulated. In the ordinary type of data packets, there is no overlap between any two sections.

However, in certain applications, in addition to the normal functions of a data packet, longer preamble sequence is desired. For example, in the ranging application, which is to estimate the distance between a receiver and a transmitter, the longer preamble section contributes to the improvement of accuracy in the channel estimation and ranging performance. Yet there is usually a limit on the total length of the data packet based on other system design concerns. Therefore, a new type of data packet that can accommodate longer preamble within the current data paket design is of great practical significance.

In the prior art, several wireless communication systems have been suggested: in the publication TERO OJANPERA and RAMJEE PRASAD: "WCDMA: towards IP mobility and mobile internet" 2001, Artech House Publishers, London, a wireless communication system is described, having a time-multiplexed preamble symbol or pilot symbol and a code-multiplexed parallel pilot channel, which are used for channel estimation in WCDMA systems. In wireless multi-carrier systems, preamble symbols are usually carried on some sub-carriers, while information data symbols are carried on other sub-carriers. Such a wireless communication system is, for example, furthermore described in "Pilot assisted multi-user UWB communications", SABERINIA, E. et al., Vehicular Technology Conference, 2003 (VTC 2003), pp. 1885-1889, Orlando, FL, USA, October 2003.

In WO 2005/013504 A1, a wireless communication method is described, with a correlation of a received UWB signal with a reference UWB signal in UWB receiver systems.

WO 2005/083919 A1 relates to a re-synchronization scheme using time-multiplexed preamble sections. The multiplexed preamble section is here used to achieve a re-synchronization between a receiver and a transmitter when a receiver is in process of receiving a data packet.

In WO 2004/079970 A2, a three-part preamble section for a UWB communication system is disclosed. The three-part preamble includes a first preamble, a marker and a second preamble, which facilitates certain signal processing needs.

Disclosure of the Invention

In this invention, we devise a new data packet structure where the preamble sequence is multiplexed with the data sequences of the header and payload section. In other words, the preamble sequence appears not only in the regular preamble section but also in the header and payload sections as well. For example, the multiplexed preamble sequence can be orthogonal or quasi-orthogonal to the regular data sequences of the header and payload sections in code division, which is not difficult to realize in most practical systems. The advantage of the new packet design is to significantly improve the performance of some important applications which depends on the length of the preamble sequence. Such applications include ranging and carrier sense. Ranging is to estimate the distance between a transmitter and a receiver. Carrier sense at one receiver is to determine whether the wireless channel is occupied by other receivers/users by processing its received signals.

This invention presents a wireless communication apparatus, method and system, utilizing a said new data packet structure. Wireless communication apparatus according to the present invention comprises: pulse generation means which generates a sequence of pulses according to said new data packet; and transmission means which transmits said sequence of pulses generated by said pulse generation means in the form of radio signals.

Wireless communication system for wireless communication from a transmitter to a receiver: wherein said transmitter transmits said new data packet in the form of a sequence of radio pulses, and said receiver receives said data packet.

Wireless communication method for wireless communication from a transmitter to a receiver, comprises: transmission step at which said transmitter transmits said new data packet in the form of a sequence of radio pulses, and receiving step at which said receiver receives said data packet.

Brief Description of the Drawings

FIG. 1 is a structural diagram of a communication system for illustrating the invention.
FIG. 2 is a block diagram of a transmitter.
FIG. 3 is a block diagram of a receiver.
FIG. 4 is the structure diagram of a regular data packet.
FIG. 5 is the structure diagram of the new data packet according to the invention.
FIG. 6 illustrates the pulse energy of the superimposed preamble sequence and other data sequences in the new data packet.
FIG. 7 illustrates an example of a preamble symbol which can be adopted in the new data packet
FIG. 8 illustrates an example of data symbols used in the header and payload sections of the new data packet.
FIG. 9 shows the numerical results on the extra energy consumed by the superimposed preamble sequences of the new data packet.
FIG. 10 shows the numerical results on ranging accuracy improvement by using the new data packet.

Best Mode for Carrying Out the Invention

An embodiment of the invention is described in detail by referring to the aforementioned figures.

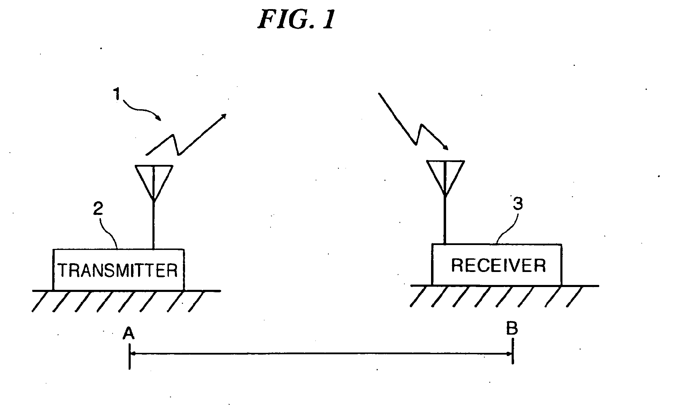

FIG. 1 shows the system configuration of a communication system 1 according to the invention. The communication system 1 is a system for wireless communication between the point A and B, employing the UWB (Ultra Wide Band) technology. The communication system 1 consists of a transmitter 2 sited at the point A and a receiver 3 sited at the point B.

The UWB technology is a technology for short-range radio communication, involving the intentional generation and transmission of radio frequency energy that spreads over a very large frequency range, overlapping several frequency bands allocated to existing radio communication services. The transmitter 2 and the receiver 3 can transmit and receive UWB signals, respectively. A UWB signal is defined as a radio signal with -10 dB bandwidth of at least 500 MHz or a fractional bandwidth greater than 0.2.

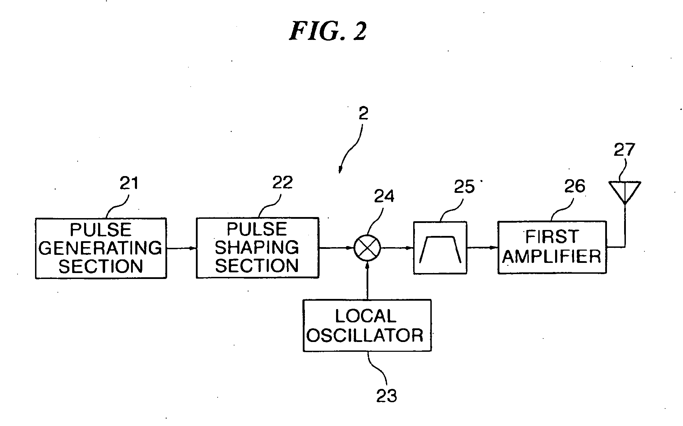

FIG. 2 shows the block diagram of the transmitter 2 that transmits a UWB signal.

The transmitter 2 comprises: a pulse generating section 21 which generates a basic UWB signal, a pulse shaping section 22 which shapes the UWB signal generated by the pulse generating section 21 according to certain spectral criteria, a local oscillator 23 which supplies a frequency reference signal to the mixer circuit 24, a mixer circuit 24 which performs frequency conversion on the output signal from the pulse shaping section 22 by using the reference frequency signal supplied from the oscillator 23, a filter 25 for limiting the bandwidth of the frequency-converted signal generated by the mixer circuit 24, a first amplifier 26 which amplifies the output signal from the filter 25, an antenna 27 which radiates the output signal from the first amplifier 26.

The pulse generating section 21 generates a sequence of UWB pulses as a basic UWB signal. A UWB pulse is a signal whose bandwidth is inverse of the pulse duration usually on the order of a nanosecond or a fraction of a nanosecond. The pulse sequence generated by the pulse generating section 21 is sent directly to the pulse shaping section 22.

The pulse shaping section 22 shapes the basic UWB signal generated by the pulse generating section 21 according to certain spectral requirement.

The local oscillator 23 generates a frequency reference signal for frequency conversion in the mixer circuit 24. The frequency of the reference signal may be precisely controlled by an unillustrated PLL (Phase-Locked Loop) circuit or the like.

The mixer circuit 24 converts the output signal from the pulse shaping section 22 into a desired frequency band by using the frequency reference signal generated from the local oscillator 23.

The bandpass filter 25 limits the output signal from the mixer circuit 24 within the desired frequency band by removing the unwanted spectral components beyond the desired band. The output signal from the filter 25 is directly fed to the first amplifier 26.

The first amplifier 26 amplifies the output signal from the filter 25 and further modifies the signal in such a way that the signal spectrum is flat within the desired frequency band.

An antenna 27 radiates the output signal generated from the first amplifier 26 as radio signal waves into space which is to be received by the receiver 3 at the point B.

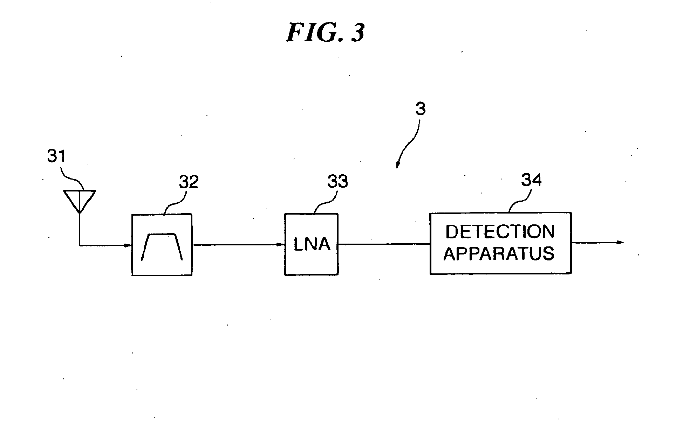

FIG. 3 shows the block diagram of the receiver 3, which receives the UWB signal, transmitted from the transmitter 2.

The receiver 3 comprises: an antenna 31 which captures the radio signal transmitted from the transmitter 2 in the air, a bandpass filter 32 which removes the unwanted spectral components of the output signal from the antenna 31, a low-noise amplifier (LNA) 33 which amplifies the output signal from the filter 32, a detection apparatus 34 which estimates the output signal from the LNA 33.

The antenna 31 captures the UWB radio signal transmitted from the transmitter 2 in the air, and converts the radio signal into an electrical signal.

The bandpass filter 32 limits the output signal from the antenna 31 within a desired frequency band by removing unwanted spectral components beyond the desired bandwidth.

The LNA 33 amplifies the output signal from the filter 32 in such a manner that amplification of the noise component contained in the signal is controlled under certain level. The amplified signal generated by the LNA 33 is sent to the detection apparatus 34.

The detection apparatus 34 estimates the output signal from the LNA 33.

FIG. 4 illustrates the structure of a regular data packet 4. The packet 4 in the form of a radio signal can be transmitted from the transmitter 2 to the receiver 3.

The regular data packet 4 consists of three sections: the preamble section 5, the header section 6 and the payload section 7, which are arranged sequentially in the packet 4. Each section contains a data sequence which is designed for its specific purpose. When the receiver 3 receives the packet 4, the preamble section 5 is first used to perform synchronization and channel estimation.

Synchronization is to obtain the timing information on how to separate individual data bits in a data sequence, and channel estimation is to estimate representative characteristics of the propagation channel between the transmitter and the receiver. Then by using the information on synchronization and channel conditions obtained from the preamble section, data in the header section 6 and the payload section 7 are demodulated. In general, the header contains the control information of the packet, such as the length or the main function of the packet, and the payload carries the real message to be transferred from the transmitter.

It needs to be emphasized that in a regular data packet, the preamble, header and payload sections are arranged sequentially. In other words, there is no overlap between data sequences of any two sections.

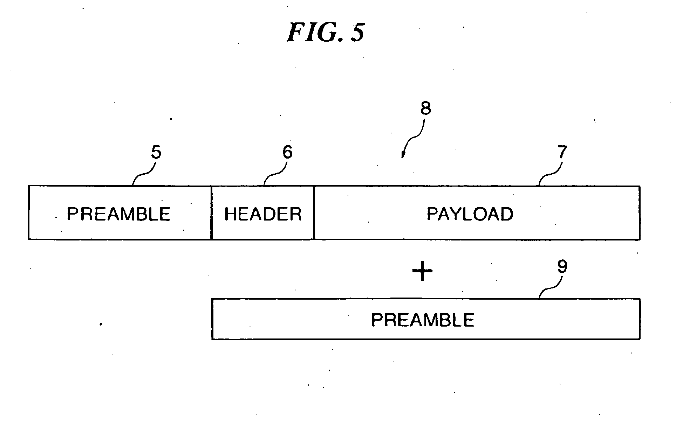

Fig. 5 shows the structure of the new data packet 8 according to the invention.

The main difference between the new data packet 8 in the present invention and the regular packet 7 is that an extra preamble sequence 9 is added or superimposed to the header section 6 and the payload section 7. Hence, in effect, the preamble sequence exists in every section (the preamble section 5, the header section 6 and the payload section 7) of the new data packet 8. Therefore, use of the new type of data packets can significantly improve the performance of some important applications, which depend on the length of the preamble sequence. Such applications include ranging and carrier sense. Ranging is to estimate the distance between the transmitter and the receiver. Carrier sense at one receiver is to determine whether the wireless channel is occupied by other receivers/users or not by checking its received signals. On the other hand, introduction of the superimposed preamble may introduce interference to the data demodulation of the header and payload section. In order to reduce such interference and maintain the performance of the data modulation, the power level of the superimposed preamble sequence can be tuned to be much lower that of the data sequences in the header and payload sections. In general, a power reduction of 7dB to 10dB of the superimposed preamble is sufficient to reduce the interference to the data demodulation.

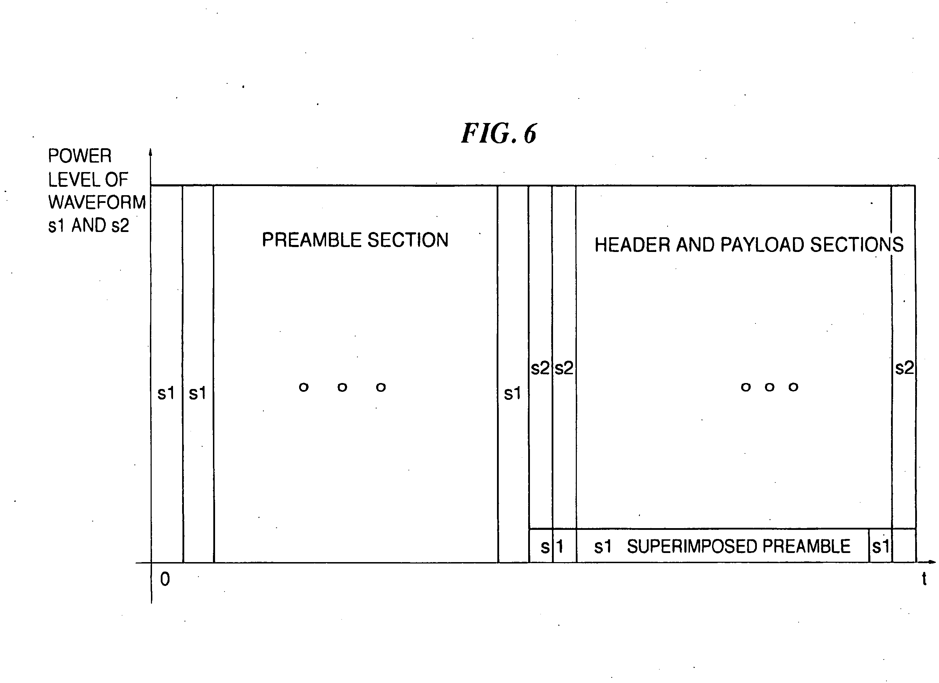

Fig. 6 illustrates an example of the new data packet 8, Fig. 6 illustrates an example of the new data packet 8, which can be applied to the IEEE 802.15.4a standards.

The horizontal axis in Fig. 6 represents time; while the vertical axis represents the power level of the data sequences in the present invention. The preamble sequence is constructed by repetition of the symbol s1, which appears in all the three sections of the data packet. The symbol s2 is used to modulate the information data in the header and payload sections according to a specific modulation scheme such as 2PPM (Pulse Position Modulation) and BPPM. The power level of the regular preamble sequence in the preamble section is same as the data sequence consisting the symbol s2 in the header and payload sections, yet is much higher than the power level of the superimposed preamble.

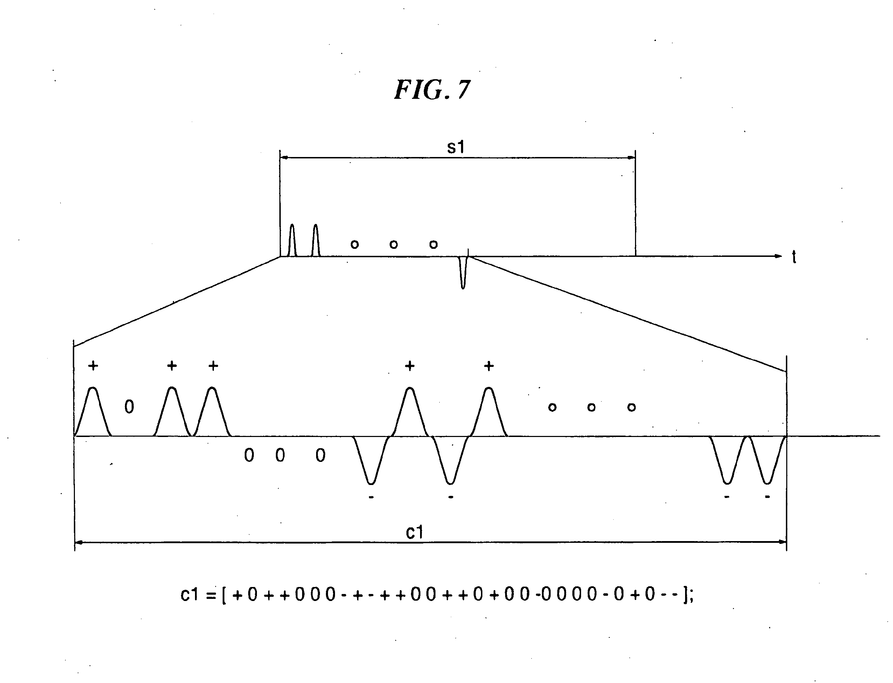

Fig. 7 provides an example of the symbol s1, which contains a burst of pulses and a long silent period, i.e, empty period. Since the UWB signals are of our primary interest, there is some constraint placed on the bandwidth or the fractional bandwidth of the pulse. The pulse burst is designed according to some conventional codes, for example the code cl in Fig. 7. The pulse shape of the code cl is the root cosine waveform with bandwidth of 500MHz and time duration of 2ns. The pulse burst is constructed according to the ternary code with length 31, specifically, cl=[+ 0 + 0 0 0 - + - + + 0 0 + + 0 + 0 0 - 0 0 0 0 - 0 + 0 - -], where the signs "+" and "-" in the code cl are represented by the pulse with opposite polarity, and symbol "0" means no pulse is transmitted during that time interval, as shown in Fig. 7.

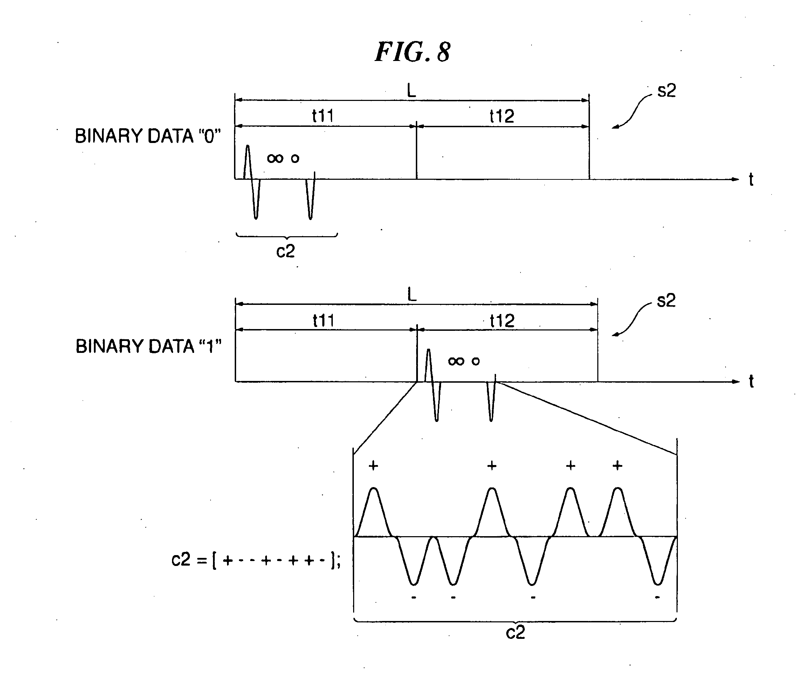

Fig. 8 provides an example of the symbol s2 with data modulation scheme 2PPM (Pulse Position Modulation).

With 2PPM, there are two symbols with equal time duration L, which represent binary data "0" and "1". The total time duration L is divided into two time slots, say t11 and t12. For the binary data "0", the time slot t11 is occupied by a pulse burst and a silent period, while the time slot t12 is completely empty. In contrast, for the binary data "1", the time slot t11 is empty, and the time slot t12 is occupied by a pulse burst and a silent period. The pulse bursts contained in the binary symbols "0" and "1" should be same. The pulse burst is designed according to some code, denoted by c2. One requirement of the code c2 is that it has to be orthogonal or quasi-orthogonal to the code cl which is adopted in symbol s1. For example, given the code cl is the ternary code with length 31, the code c2 can be the Walsh code with code length 8, in particular, c2= [+ - - + - + + -]. Same as in code cl, the signs "+" and "-" in the code c2 are represented by the pulse with opposite polarity.

In what follows, we show the effectiveness of the new data packet by examining several numerical results.

First, the system parameters adopted in the numerical examples is described. The ternary code with code length 31. is used as the code cl for modulating the pulse burst in the preamble symbol s1. The Walsh code for modulating the pulse burst in the data symbol s2 with the modulation scheme 2PPM of the header and payload section. The root cosine waveform with bandwidth of 500MHz and time duration of 2ns is taken as the basic pulse constructing both pulse bursts cl and c2. The time durations of the symbol s1 and s2 are lus and 0.5us, respectively. The preamble sequence consists of repetition of the symbol s1, as shown in Fig. 6. The header and payload sections contain two components: one is a sequence of data symbols representing regular data information of header and payload; the other component is the preamble sequence of repetition of s1. Three time durations of the preamble section, i.e., 500us, 1ms, 4ms, and the header and payload section of 256us are adopted.

The power level of the superimposed preamble sequence is much lower than that of regular preamble sequence and the data sequence in the header and payload section. About 7-15dB reduction is examined in the following numerical results. The advantages of reducing the power level of the superimposed preamble are in three folds: first, the superimposed preamble will not cause interference to the data demodulation of the header and payload sections. Second, the resulting energy consumption is negligibly small. Third, although the energy level of the superimposed pulse is low, performance gain is guaranteed by exploiting the repetition the preamble symbol s1. Therefore, in summary, the new data packet structure can greatly improve the performance of the applications depending on the preamble sequence while maintaining the regular functions of a data packet.

Next, we present two numerical results regarding the new data packet.

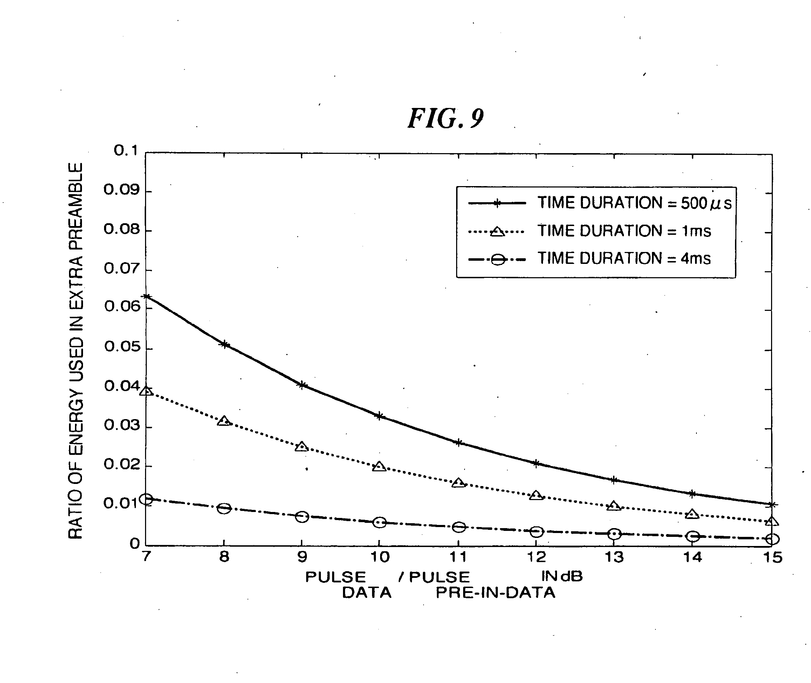

Fig. 9 shows the ratio of the extra energy consumed by the superimposed preamble, compared with the total energy used by the whole data packet, versus the ratio between the pulse energy of the data information ($pulse_{data}$) and that of the superimposed preamble ($pulse_{pre-in-data}$), which is denoted by P. The horizontal axis in Fig. 9 represents $pulse_{data}$ $pulse_{pre-in-data}$ (=P) in DB; while the vertical axis represents the ratio of energy used in superimposed preamble. The plots in Fig. 9 illustrate three time durations of the preamble section (500us, 1ms, 4ms).

It is seen that the extra energy consumption is very low, less than 5% for P >8dB. Therefore, compared with the regular data packet without the superimposed preamble, only limited amount of increase in power is needed to transmit the new data packet.

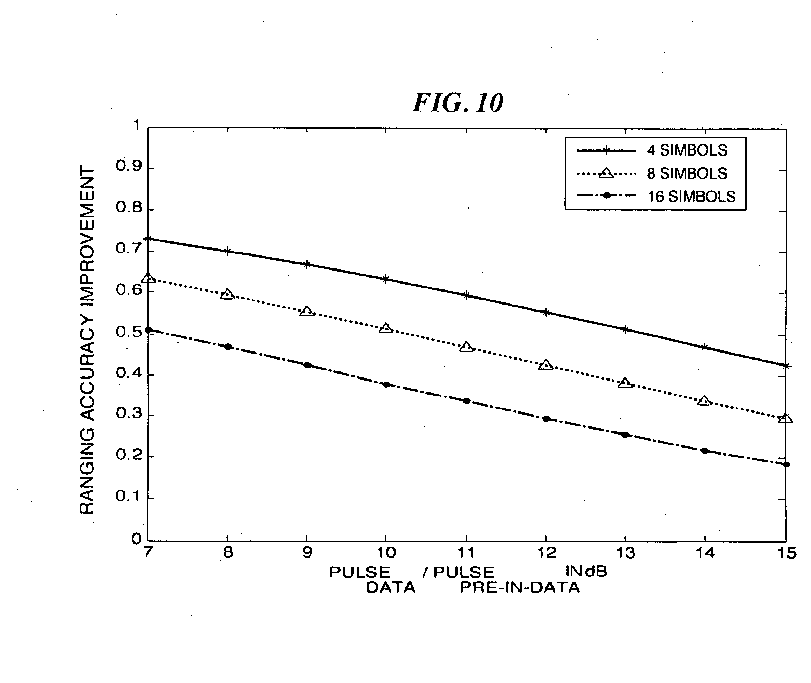

Fig. 10 shows the improvement of ranging accuracy versus the energy ratio P with 4 ,8, 16 of the preamble symbol s1 used for ranging in the preamble section. The horizontal axis in Fig. 10 represents $pulse_{data}$ $pulse_{pre-in-data}$ (=P) in DB; while the vertical axis represents accuracy improvement in ranging.

Ranging is to estimate the distance between a transmitter and a receiver by processing the received data packet transmitted from the transmitter. Here the improvement of ranging accuracy is approximated by assuming a coherent ranging scheme. The relation that the variance of a ranging estimate is proportional to 1/R, where R is the signal-to-noise ratio, is adopted. Let the variance of a ranging estimate based on the preamble section be , and that based on the superimposed preamble be . It can be shown that the smallest variance of the ranging estimate by combining the above two estimates

is $\sigma^2 = 1/(1/\sigma_1^2 + 1/\sigma_2^2)$, which is smaller than

either $\sigma_1^2$ or $\sigma_2^2$. The improvement of the ranging accuracy is given by $\sqrt{\dfrac{|\sigma^2 - \sigma_1^2|}{\sigma_1^2}}$ It is observed from Fig. 10 that significant accuracy improvement, about 50%, can be obtained in most of cases examined. This is because a relatively small number of sl's in the preamble section, e.g., 4, 8 or 16, can be utilized for ranging, compared with much larger number of sl's in the superimposed preamble, e.g., over 256 sl's with in the header and payload section of 256us.

Industrial Applicability

Compared with existing data packet, the new data packet according to this invention can achieve much better performance for some important applications depending on the preamble of their data packets, while maintaining most functions of a regular data packet.

**Claims**

1. Wireless communication apparatus comprising:

   pulse generation means (21, 22) adapted to generate a sequence of pulses; and transmission means (2) adapted to transmit said sequence of pulses generated by said pulse generation means (21, 22) in the form of radio signal, wherein said pulse generation means (21, 22) generates said sequence of pulses as a data packet (8), which comprises:

   preamble section (5) which consists of a preamble sequence for initial symbol synchronization and channel estimation; header section (6) which consists of both regular header information on said data packet (8) and multiplexed preamble sequences;

payload section (7) which consists of both regular payload message of said data packet (8) and multiplexed preamble sequences, wherein said multiplexed preamble sequences in said header (6) and payload section (7) are superimposed onto said header information and payload data information such that said multiplexed preamble sequences and data sequences of said header information and payload data information are orthogonal or quasi-orthogonal in code division,

**characterized in that** the power level of said superimposed preamble sequence in said header (6) and payload section (7) is tuned to be lower than the power level of said data sequences in said header (6) and payload section (7).

2. The wireless communication apparatus according to claim 1, which adopts the UWB Ultra Wideband, radio signals.

3. Wireless communication system adapted to perform wireless communication from transmitter (2) to receiver (3), comprising at least a transmitter (2) and at least a receiver (3), wherein said transmitter (2) comprises a wireless communication apparatus according to claim 1.

4. The wireless communication system according to claim 3, which adopts the UWB, Ultra Wideband, radio signals.

5. Wireless communication method for wireless communication from transmitter (2) to receiver (3), comprising:

transmission step at which said transmitter (2) transmits sequence of pulses as a data packet (8), which comprises: preamble section (5) which consists of a preamble sequence for initial symbol synchronization and channel estimation;

header section (6) which consists of both regular header information on said data packet (8) and multiplexed preamble sequences; payload section (7) which consists of both regular payload message of said data packet (8) and multiplexed preamble sequences,

receiving step at which said receiver (3) receives said data packet (8) consisting of said preamble (5), header (6) and payload section (7),

wherein said multiplexed preamble sequences in said header (6) and payload section (7) are superimposed onto said header information and payload data information such that said multiplexed preamble sequences and data sequences of said header information and payload data information are orthogonal or quasi-orthogonal in code division,

**characterized in that** the power level of said superimposed preamble sequence in said header (6) and payload section (7) is tuned to be lower than the power level of said data sequence in said header (6) and payload section (7).

6. The wireless communication method according to claim 5, which utilizes the UWB, Ultra Wideband, radio signals.

**Patentansprüche**

1. Drahtlose Kommunikationsvorrichtung, umfassend:

eine Pulserzeugungseinrichtung (21, 22), die zur Erzeugung einer Sequenz von Pulsen geeignet ist; und eine Übertragungseinrichtung (2), die zur Übertragung der Sequenz von Pulsen geeignet ist, welche durch die Pulserzeugungseinrichtung (21, 22) in der Form eines Radiosignals erzeugt werden, wobei die Pulserzeugungseinrichtung (21, 22) die Sequenz von Pulsen als ein Datenpaket (8) erzeugt, welches umfasst:

einen Präambelabschnitt (5), welcher aus einer Präambelsequenz für anfängliche Symbolsynchronisation und Kanaleinschätzung gebildet ist;

einen Kopfabschnitt (6), welcher sowohl aus regulärer Kopfinformation auf dem Datenpaket (8) wie auch den gemultiplexten Präambelsequenzen gebildet ist;

einen Ladungsabschnitt (7), welcher sowohl aus regulärer Ladungsmeldung des Datenpakets (8) wie auch den gemultiplexten Präambelsequenzen gebildet ist,

wobei die gemultiplexten Präambelsequenzen in dem Kopf (6) und dem Ladungsabschnitt (7) auf die Kopfinformation und Ladungsdateninformation überlagert sind, so dass die gemultiplexten Präambelsequenzen und Datensequenzen der Kopfinformation und der Ladungsdateninformation orthogonal oder quasi-orthogonal in Code-Multiplex sind,

**dadurch gekennzeichnet, dass** das Leistungsniveau der überlagerten Präambelsequenz in dem Kopf (6) und Ladungsabschnitt (7) dahingehend abgestimmt ist, niedriger als das Leistungsniveau der Datensequenzen in dem Kopf (6) und dem Ladungsabschnitt (7) zu sein.

**2.** Drahtlose Kommunikationsvorrichtung nach Anspruch 1, welche UWB, Ultra Wideband, -Radiosignale anwendet.

**3.** Drahtloses Kommunikationssystem, welches zum Ausführen drahtloser Kommunikation vom Überträger (2) zum Empfänger (3) geeignet ist, umfassend zumindest einen Überträger (2) und zumindest einen Empfänger (3), wobei der Überträger (2) eine drahtlose Kommunikationsvorrichtung nach Anspruch 1 umfasst.

**4.** Drahtloses Kommunikationssystem nach Anspruch 3, welches UWB, Ultra Wideband, -Radiosignale anwendet.

**5.** Drahtlos-Kommunikations-Verfahren für drahtlose Kommunikation von einem Überträger (2) zu einem Empfänger (3), umfassend:

einen Übertragungsschritt, bei welchem der Überträger (2) eine Sequenz von Pulsen als ein Datenpaket (8) überträgt, welches umfasst: einen Präambelabschnitt (5), welcher aus einer Präambelsequenz für anfängliche Symbolsynchronisation und Kanaleinschätzung gebildet ist; einen Kopfabschnitt (6), welcher sowohl aus regulärer Kopfinformation auf dem Datenpaket (8) wie auch gemultiplexten Präambelsequenzen gebildet ist; einen Ladungsabschnitt (7), welcher sowohl aus regulärer Ladungsmitteilung des Datenpakets (8) wie auch gemultiplexten Präambelsequenzen gebildet ist, einen Empfangsschritt, bei welchem der Empfänger (3) das Datenpaket (8) empfängt, welches aus der Präambel (5), dem Kopf (6) und dem Ladungsabschnitt (7) gebildet ist, wobei die gemultiplexten Präambelsequenzen in dem Kopf (6) und dem Ladungsabschnitt (7) auf die Kopfinformation und die Ladungsdateninformation derart überlagert sind, dass die gemultiplexten Präambelsequenzen und Datensequenzen der Kopfinformation und Ladungsdateninformation orthogonal oder quasi-orthogonal in Code-Multiplex sind, **dadurch gekennzeichnet, dass** das Leistungsniveau der überlagerten Präambelsequenz in dem Kopf (6) und Ladungsabschnitt (7) dahingehend abgestimmt ist, niedriger als das Leistungsniveau der Datensequenz in dem Kopf (6) und dem Ladungsabschnitt (7) zu sein.

**6.** Drahtlos-Kommunikations-Verfahren nach Anspruch 5, welches UWB, Ultra Wideband, -Radiosignale anwendet.

**Revendications**

**1.** Appareil de communication sans fil comprenant :

un moyen de génération d'impulsion (21, 22) adapté pour générer une séquence d'impulsions ; et un moyen de transmission (2) adapté pour transmettre ladite séquence d'impulsions générée par ledit moyen de génération d'impulsion (21, 22) sous la forme de signal radio, dans lequel ledit moyen de génération d'impulsion (21, 22) génère ladite séquence d'impulsions comme un paquet de données (8), qui comprend :

une section de préambule (5) qui consiste en une séquence de préambule pour une synchronisation de symbole initial et en une estimation de canal ; une section d'entête (6) qui consiste à la fois en des informations d'entête habituelles sur ledit paquet de données (8) et en des séquences de préambule multiplexées ; une section de charge utile (7) qui consiste à la fois en un message de charge utile habituel dudit paquet de données (8) et en des séquences de préambule multiplexées, dans lequel lesdites séquences de préambule multiplexées dans ledit entête (6) et la section de charge utile (7) sont superposées sur lesdites informations d'entête et lesdites informations de données de charge utile de sorte que lesdites séquences de préambule multiplexées et les séquences de données desdites informations d'entête et desdites informations de données de charge utile sont orthogonales ou quasi orthogonales en division de code, **caractérisé en ce que** le niveau de puissance de ladite séquence de préambule superposée dans ledit entête (6) et la section de charge utile (7) est adapté pour être inférieur au niveau de puissance desdites séquences de données dans ledit entête (6) et la section de charge utile (7).

**2.** Appareil de communication sans fil selon la revendication 1, qui adopte les signaux radio UWB, Ultra Large Bande.

**3.** Système de communication sans fil adapté pour réaliser une communication sans fil à partir d'un émetteur (2) vers un récepteur (3) comprenant au moins un émetteur (2) et au moins un récepteur (3), dans lequel ledit émetteur (2) comprend un appareil de communication sans fil selon la revendication 1.

**4.** Système de communication sans fil selon la revendication 3, qui adopte les signaux radio UWB, Ultra Large Bande.

5.  Procédé de communication sans fil pour une communication sans fil d'un émetteur (2) à un récepteur (3), comprenant :

    une étape de transmission à laquelle ledit émetteur (2) transmet une séquence d'impulsions comme un paquet de données (8), qui comprend : une section de préambule (5) qui consiste en une séquence de préambule pour une synchronisation de symbole initial et une estimation de canal ; une section d'entête (6) qui consiste à la fois en des informations d'entête habituelles sur ledit paquet de données (8) et en des séquences de préambule multiplexées ; une section de charge utile (7) qui consiste à la fois en un message de charge utile habituel dudit paquet de données (8) et en des séquences de préambule multiplexées, une étape de réception à laquelle ledit récepteur (3) reçoit ledit paquet de données (8) consistant en ledit préambule (5), l'entête (6) et la section de charge utile (7),
    dans lequel lesdites séquences de préambule multiplexées dans l'entête (6) et la section de charge utile (7) sont superposées sur lesdites informations d'entête et les informations de données de charge utile de sorte que lesdites séquences de préambule multiplexées et séquences de données desdites informations d'entête et des informations de données de charge utile sont orthogonales ou quasi orthogonales en division de code,
    **caractérisé en ce que** le niveau de puissance de ladite séquence de préambule superposée dans ledit entête (6) et la section de charge utile (7) est adapté pour être inférieur au niveau de puissance de ladite séquence de données dans ledit entête (6) et la section de charge utile (7).

6.  Procédé de communication sans fil selon la revendication 5, qui utilise les signaux radio UWB, Ultra Bande Large.

# FIG. 1

## FIG. 2

## FIG. 3

*FIG. 4*

## FIG. 5

| PREAMBLE | HEADER | PAYLOAD |
|----------|--------|---------|

**+**

| PREAMBLE |
|----------|

## FIG. 6

POWER LEVEL OF WAVEFORM s1 AND s2

PREAMBLE SECTION

HEADER AND PAYLOAD SECTIONS

s1   s1   o  o  o   s1   s2 s2   o  o  o   s2

s1   s1   SUPERIMPOSED PREAMBLE   s1

0   t

EP 1 972 067 B1

## FIG. 7

$c1 = [ + 0 + + 0 0 0 - + - + + 0 0 + + 0 + 0 0 - 0 0 0 0 - 0 + 0 - - ]$;

EP 1 972 067 B1

## FIG. 8

BINARY DATA "0"

∞ ∘

c2

BINARY DATA "1"

∞ ∘

c2 = [ + - - + - + + - ];

+      +      +    +

-    -     -       -

c2

EP 1 972 067 B1

## FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005013504 A1
- WO 2005083919 A1

- WO 2004079970 A2

**Non-patent literature cited in the description**

- **TERO OJANPERA ; RAMJEE PRASAD.** WCDMA: towards IP mobility and mobile internet. Artech House Publishers, 2001

- **SABERINIA, E. et al.** Pilot assisted multi-user UWB communications. *Vehicular Technology Conference, 2003 (VTC 2003),* 2003, 1885-1889